# NEUE EUROPÄISCHE PATENTSCHRIFT

(11) **EP 0 460 124 B2**
(45) Veröffentlichungstag und Bekanntmachung des Hinweises auf die Entscheidung über den Einspruch: **22.10.1997**
(45) Hinweis auf die Patenterteilung: 25.05.1994
(21) Anmeldenummer: 90916001.2
(22) Anmeldetag: 08.11.1990
(51) Int. Cl.: G03B 27/73

(54) **BILDANALYSEGERÄT**
IMAGE ANALYSIS DEVICE
ANALYSEUR D'IMAGE

(30) Priorität: 22.12.1989 DE 3942633
(43) Veröffentlichungstag der Anmeldung: 11.12.1991
(73) Patentinhaber: BBS AG INTERNATIONAL, FL-9493 Mauren (LI); Brugger, Gerhard, D-83700 Rottach-Egern (DE); SCHMERLER, Detlev, FL-9493 Mauren (LI)
(72) Erfinder: BRUGGER, Gerhard, D-8183 Rottach-Egern (DE); SCHMERLER, Detlev, FL-9493 Mauren (LI)
(74) Vertreter: Schoppe, Fritz, Dipl.-Ing.
(86) Internationale Anmeldenummer: DE9000848
(87) Internationale Veröffentlichungsnummer: WO9110163

(56) Entgegenhaltungen:
- EP-A- 0 255 128
- EP-B- 0 128 349
- DE-A- 3 527 853
- US-A- 4 583 186
- US-A- 4 676 628
- FUNKSCHAU, no. 6, 20 March 1981, (München, DE), R. Rumland: "Flimmerfreies Abtastverfahren für Super-8-Filme", pp. 69-71

## Beschreibung

Die vorliegende Erfindung betrifft ein Bildanalysegerät zum Einstellen eines Kopiergerätes für die Herstellung photographischer Abzüge bezüglich einer Farbzusammensetzung des von einer Belichtungseinrichtung des Kopiergerätes abzugebenden Belichtungslichtes und gegebenenfalls einer Schärfe und gegebenenfalls eines Bledenwertes und/oder einer Belichtungszeit, mit einer Videobildwandlervorrichtung zum Aufnehmen des Bildes einer von der Belichtungseinrichtung des Kopiergerätes belichteten Vorlage, nach dem Oberbegriff des Patentanspruchs 1.

Ein derartiges Bildanalysegerät, wie es beispiesweise aus dem deutschen Patent 35 27 853 der Anmelderin oder der US 4 676 628 bekannt ist, umfaßt eine Videobildwandlervorrichtung zum Aufnehmen einer von der Belichtungseinrichtung des Kopiergerätes belichteten Vorlage. Die Videobildwandlervorrichtung steht über eine Schaltung zum Einstellen der Farbe und Helligkeit des Bildwandlersignals mit einem Monitor in Verbindung. Im Falle von Negatiworlagen umfaßt diese Farbeinstellschaltung eine Farbumkehrschaltung. Nach einer einmaligen Eichung der Gesamtanordnung ermöglicht das bekannte Bildanalysegerät durch eine Einstellung des Farbmischkopfes des Kopiergerätes in der Weise, daß das erzeugte Monitorbild die gewünschten Farben zeigt, eine sichere Ermittlung der Farbzusammensetzung und gegebenenfalls der Helligkeit oder Belichtungszeit des für ein bestimmtes Negativ oder Positiv zu verwendenden Belichtungslichtes. Jedoch erfordert die jeweilige Einstellung in jedem Fall das Eingreifen einer Bedienungsperson sowie ein bezüglich der Farbbeurteilung des Monitorbildes geübtes Betrachtungsvermögen derselben.

Zum automatischen Bestimmen des Farbwertes und der Helligkeit des Belichtungslichtes für die Herstellung des Abzuges in einem Printer werden heutzutage Videoanalysevorrichtungen eingesetzt, die ohne Eingreifen einer Bedienungsperson den für eine bestimmte Vorlage zu verwendenden Farbwert sowie die Belichtungsdauer des Belichtungslichtes ermitteln. Derartige Videoanalysevorrichtungen werden auch als Autoscanner bezeichnet Ein Autoscanner umfaßt eine Belichtungsvorrichtung für die Belichtung der Vorlage, die üblicherweise ein Negativ oder eine Durchlichtvorlage ist, sowie eine beispielsweise als Videokamera ausgeführte Abtastvorrichtung zum Aufnehmen der Vorlage. An die Abtastvorrichtung ist ein Computer angeschlossen. Unter der Steuerung eines Computerprogrammes wird von der Abtastvorrichtung eine bestimmte Anzahl von Meßpunkten bezüglich Ihrer Helligkeit- und Farbwerte untersucht. Aus diesen Informationen wird der Farbwert für das Belichtungslicht des Kopiergerätes oder Printers sowie die Belichtungszeit und die Helligkeit desselben abgeleitet. Für diese Ableitung oder Berechnung benötigt ein Autoscanner einen vorbestimmten Datensatz für jeden Filmtyp. Wenn ein Negativ unterbelichtet oder überbelichtet, fehlentwickelt oder fehlgelagert wird, verändern sich jedoch dessen Maskenfarbstoffe, wobei der für einen bestimmten Filmtyp einmal festgesetzte Datensatz für diesen nicht mehr zutreffend ist. Damit stimmen auch die von dem bekannten Autoscanner ermittelten Werte für die Einstellung des Kopiergerätes oder Printers bei der Belichtung eines Abzuges nicht mehr. Ein weiterer Nachteil derartiger Autoscanner besteht darin, daß es sich bei diesen Geräten um Anlagen mit einem sehr erheblichen Preis in der Größenordnung von über hunderttausend Mark handelt, so daß mittelständische Fotobetriebe nicht in der Lage sind, mit derartigen Autoscannern zu arbeiten.

Aus der EP-A1-00 54 848 ist eine Videoanalysevorrichtung mit einem integrierten Printer oder Kopiergerät bekannt, die eine einzige, als Farbmischkopf ausgeführte Belichtungsvorrichtung sowohl für die Analyse der Vorlage wie auch für die Belichtung des Aufzeichnungsmateriales hat, und die ferner eine Videokamera zum Aufnehmen der Vorlage aufweist, die an einen Monitor angeschlossen ist. Die Videokamera, mit der die Vorlage betrachtet wird, Ist in ihrer Spektralempfindlichkeit an diejenige des verwendeten Fotomateriales angepaßt. Mittels eines Farbrechners werden Steuerwerte für den Monitor in der Weise errechnet, daß das auf dem Monitor wiedergegebene Fernsehbild der zu erwartenden Kopie entspricht. Auch diese bekannte Vorrichtung umfaßt einen Computer, der mit Datensätzen für die einzelnen Filmtypen arbeitet, so daß die oben erläuterten Probleme bei einer Verschiebung der Negativmaske bzw. bei einer Veränderung der Maskenfarbstoffe auch bei dieser bekannten Videoanalysevorrichtung auftreten können.

Aus der EP-A2-0255128 ist bereits ein Bildanalysegerät mit einem Spektralfilter im Strahlengang einer Kamera bekannt. Ein derartiges System wird auch als Autoscanner bezeichnet. Das Filter im Strahlengang dient dazu, die Spitzenwellenlänge des roten Lichts in dem Ausgangssignal der Kamera in Richtung zu längeren Wellenlängen hin zu verändern, um die Farbzusammensetzung des auf der Anzeigevorrichtung angezeigten Bildes an die Farbart der Kopie anzunähern.

Aus der EP-B1-0128349 ist ein computergestütztes Autocannersystem bekannt, welches mit einem Scanner eine Vorlage abtastet, die entsprechenden Farbwerte in einem Speicher ablegt und mittels einer Computeranlage den Steuerwert für die Ansteuerung von Kopierfiltern umrechnet. Bei diesem Autoscannersystem werden die sogenannten "dünnsten" Meßpunkte des Negativs für die Farbbeurteilung der Maske verwendet.

Ausgehend von diesem Stand der Technik liegt der vorliegenden Erfindung die Aufgabe zugrunde, ein Bildanalysegerät der im Oberbegriff des Patentanspruchs 1 genannten Art so weiterzubilden, daß die Ermittlung der Farbzusammensetzung des von einer Belichtungseinrichtung des Kopiergerätes abzugebenden Belichtungslichtes für eine bestimmte Vorlage weiter vereinfacht, wird.

Diese Aufgabe wird bei einem Bildanalysegerät nach dem Oberbegriff des Patentanspruchs 1 durch die im kennzeichnenden Teil des Patentanspruchs 1 angegebenen Merkmale gelöst.

Der Erfindung liegt die Erkenntnis zugrunde, daß es nach Anpassung des Spektralempfindlichkeitsverlaufes der Videobildwandlervorrichtung an den Spektralempfindlichkeitsverlauf des in dem Kopiergerät verwendeten Papieres möglich ist, den Farbwert des von der Belichtungseinrichtung des Kopiergerätes für eine optimale Kopie abzugebenden Lichtes so einzustellen, daß Verschiebungen der Negativmaskierung bzw. Veränderungen des Maskenfarbstoffes durch Fehlentwicklung oder Fehllagerung der Materialien kompensiert werden, indem ein Weißbalancesteuerkreis, wie er in verschiedenen Videokameras serienmäßig vorgesehen ist, zum Erzeugen von Farbkomponentensignalen für wenigstens zwei Farbkomponenten des von der Belichtungseinrichtung des Kopiergerätes abgegebenen Belichtungslichtes verwendet wird. Mit anderen Worten lehrt die Erfindung, daß die Farbstichigkeit einer Vorlage von dem normalerweise für diese Zwecke nicht geeigneten Weißbalancesteuerkreis einer Videokamera dann analysierbar ist, wenn Maßnahmen getroffen werden, die den Spektralempfindlichkeitsverlauf der Videobildwandlervorrichtung der Videokamera an den Spektralempfindlichkeitsverlauf des in dem Kopiergerät verwendeten Fotomateriales anpassen.

Bevorzugte Weiterbildungen sind Gegenstand der Unteransprüche.

Nachfolgend werden unter Bezugnahme auf die beiliegenden Zeichnungen bevorzugte Ausführungsformen der Erfindung näher erläutert. Es zeigen:
- Fig. 1: eine Gesamtansicht eines Kopiergerätes mit einem Bildanalysegerät nach der vorliegenden Erfindung mit einem nachgeschalteten Monitor;
- Fig. 2: eine senkrechte Schnittdarstellung durch das Bildanalysegerät nach der Erfindung; und
- Fig. 3: eine Draufsicht auf das in Fig. 2 gezeigte Bildanalysegerät nach der Erfindung.

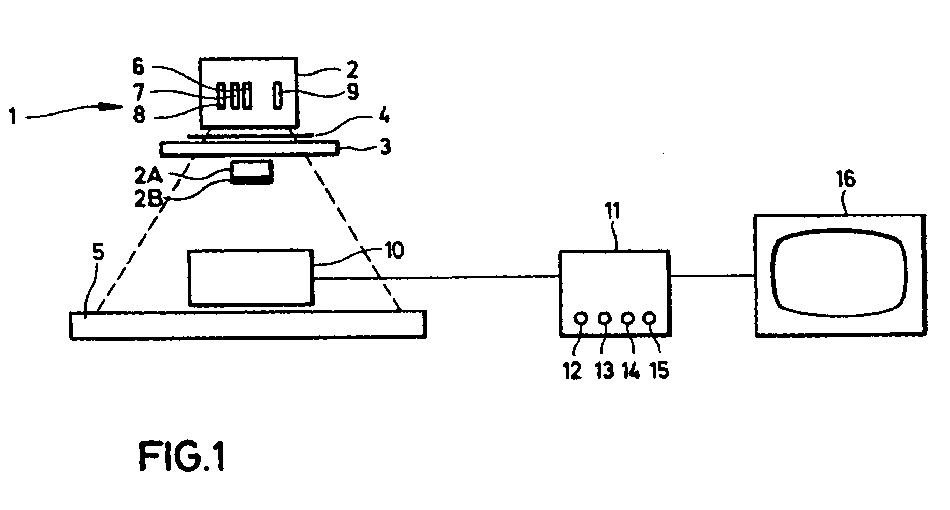

In Fig. 1 ist ein an sich bekanntes Kopiergerät, das in seiner Gesamtheit mit dem Bezugszeichen 1 bezeichnet ist, gezeigt, welches einen Farbmischkopf 2, der als Belichtungseinrichtung dient, eine im Strahlengang hinter dem Farbmischkopf 2 angeordnete Vorlagenbühne 3 für eine Vorlage 4, die ein Positiv oder Negativ sein kann, sowie eine Papierauflage 5 aufweist.

Der Farbmischkopf 2 umfaßt Farbfiltereinstellräder 6, 7, 8 für die Einstellung der drei Farbfilter für die drei Farbkomponenten des von dem Farbmischkopf 2 abgegebenen Belichtungslichtes, sowie ein Dichteeinstellrad 9 für die Einstellung der Lichtintensität Selbstverständlich kann die Lichtmenge auch über eine Blende 2B am Objektiv 2A des Farbmischkopfes geregelt werden. Wird ein optimaler Blendenwert überschritten oder unterschritten, so kann die Belichtungszeit über eine Belichtungszeiteinstellschaltung verändert werden, die mit einem noch zu beschreibenden Helligkeitseichpotentiometer 15 der Schaltung 11 gekoppelt ist.

Zur Einstellung der Farbzusammensetzung und gegebenenfalls der Schärfe sowie gegebenenfalls eines Blendenwertes oder einer Belichtungszeit des vom Farbmischkopf 2 abgegebenen Belichtungslichtes des Kopiergerätes 1 wird das erfindungsgemäße Bildanalysegerät 10 auf die Papierauflage 5 gestellt Gleichfalls ist es denkbar, das erfindungsgemäße Bildanalysegerät mit einem vorgegebenen Abstand zur Papierauflage 5 mittels eines Schwenkmechanismus (nicht dargestellt) in den Strahlengang des Kopiergerätes 1 einzuschwenken.

Das erfindungsgemäße Bildanalysegerät 10 enthält, wie noch im einzelnen unter Bezugnahme auf die nachfolgenden Figuren erläutert wird, eine Videobildwandlervorrichtung 19 zum Aufnehmen der von dem Farbmischkopf 2 belichteten Vorlage 4.

Das von der Videobildwandlervorrichtung, die eine Videokamera sein kann, abgegebene Bildsignal wird einer Schaltung 11 zum Einstellen der Farbe und Helligkeit des Bildsignales zugeführt. Diese Schaltung umfaßt bei einer bevorzugten Ausführungsform eine Umschalteinrichtung, bei deren Betätigung das der Schaltung zugeführte Eingangssignal sowohl farbmäßig als auch helligkeitsmäßig zu einem komplementären Signal umformbar ist. Mit dieser Schaltung 11 kann durch Betätigung von Farbeichpotentiometern 12, 13, 14 bzw. einem Helligkeitseichpotentiometer 15 der Farbwert oder Helligkeitswert eines Monitorbildes auf einem Monitor 16, welcher der Schaltung 11 zum Einstellen der Farbe und Helligkeit nachgeschaltet ist, eingestellt werden.

Eine einmalige Eichung dieser Schaltung 11 durch geeignete Einstellung der Farbeichpotentiometer 12, 13, 14 bzw. des Helligkeitseinstellpotentiometers 15 geschieht folgendermaßen:

Zunächst wird durch Erstellung von Probeabzügen eines Testnegatives mit Graureferenz für eine beliebige Vorlage 4 die optimale Einstellung der Farbfiltereinstellräder 6, 7, 8 bzw. des Dichteeinstellrades 9 bzw. der Blende 2B festgelegt. Mittels des Joystick 24 wird die elektronische Erzeugung einer Graureferenz gesteuert. Die Graureferenz des Testnegatives muß mit der unter der Steuerung des Joysticks 24 erzeugten Graureferenz übereinstimmen. Mit diesem bezüglich seiner Farbwerte und seines Helligkeitswertes als optimal angesehenen Abzug wird das Bild des Monitors 16 durch Einstellung der Farbeichpotentiometer 12, 13, 14 bzw. des Helligkeitseinstellpotentiomers 15 derart eingestellt, daß es bezüglich seiner Farbwerte oder seines Helligkeitswertes der Vorlage entspricht. Diese Einstellung wird für die Erstellung späterer Abzüge von anderen Vorlagen 4 unverändert beibehalten.

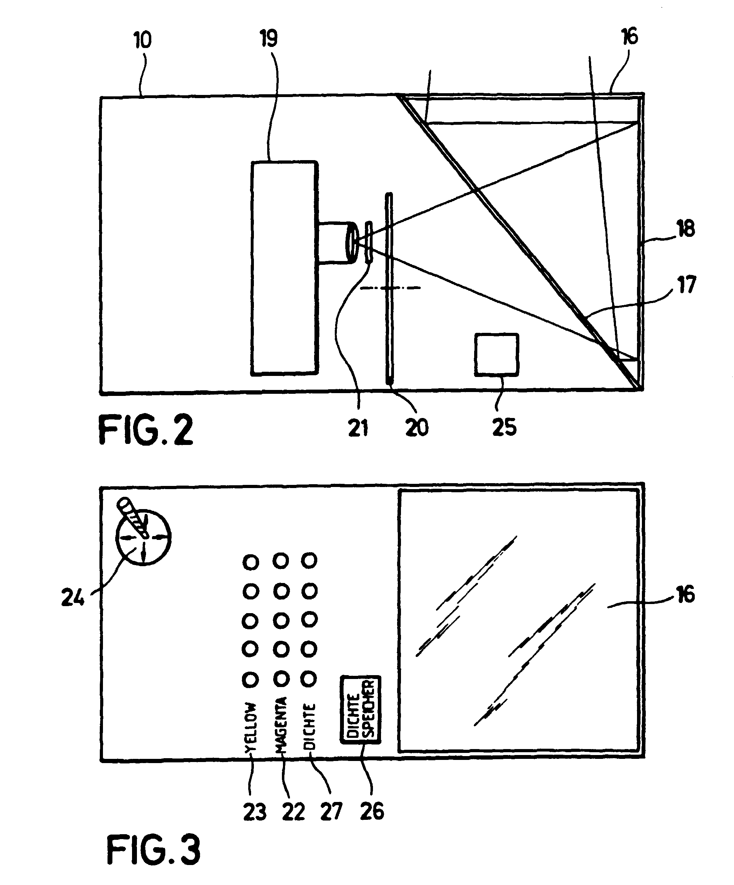

Nachfolgend wird der Aufbau des erfindungsgemäßen Bildanalysegerätes sowie dessen Funktionsweise unter Bezugnahme auf die Figuren 2 und 3 näher erläutert.

Wie in der Vertikalschnittdarstellung gemäß Fig. 2 zu sehen ist, umfaßt das Bildanalysegerät 10 an seiner oberen Gehäuseseite eine Glasplatte 16, durch die das vom Farbmischkopf 2 durch die Vorlage 4 abgegebene Licht in das Bildanalysegerät 10 eintritt. Hier trifftes auf einen in einem 45°-Winkel gegenüber der Horizontalen angeordneten halbdurchlässigen Spiegel 17, von dem die Abbildung der Vorlage 4 auf eine Reflektorwand 18 umgelenkt wird. Die Reflektrowand 18 kann beispielsweise als Leinwand oder Spiegel ausgeführt sein.

Die Abbildung der belichteten Vorlage 4 auf der Leinwand 18 wird von einer Videobildwandiervorrichtung einer Videokamera 19 aufgenommen, die innerhalb des Bildanalysegerätes 10 angeordnet ist, im Strahlengang zwischen dem Objektiv der Videokamera 19 und der Reflektorwand 18 liegt eine Dichteeinstelirad 20, dessen Drehstellung, welche der Dichte des Dichteeinstelirades am Ort des Objektives der Videocamera 19 entspricht, von einer Drehwinkelerfassungseinrichtung (nicht dargestellt) abgetastet wird. Diese Drehwinkelerfassungseinrichtung kann ein Drehpotentiometer sein. Das Ausgangssignal dieses Drehpotentiometers wird als Einstellsignal für den Zeitgeber für die Belichtungszeit verwendet Das soeben beschriebene Dichteeinstellrad 20 kann auch durch eine Blende im Objektiv der Videokamera 19 realisiert sein.

Zwischen dem Dichteeinstellrad 20 und dem Objektiv der Videokamera 19 liegt ein Spektralfllter 21, mit dem der Spektralempfindlichkeitsverlauf der videobildwandlervorrichtung der Videokamera 19 an denjenigen des im Kopiergerät verwendeten Fotornateriales angepaßt wird.

Das Spektralfilter 21 kann an jeglichem Ort im Strahlengang zwischen dem Farbmischkopf und der Videokamera angeordnet sein.

Aufgrund dieser Anpassung des Spektralempfindlichkeitsverlaufes der Videobildwandiervorrichtung der Videokamera 19 an den Spektralempfindlichkeitsverlauf des verwendeten Fotomaterlals ist es möglich, die richtige bzw. farbstichige Korrelation der Farbkomponenten des Lichtes hinter der Vorlage 4 In Abhängigkeit von der Farbstichigkeit der Vorlage und dem verwendeten Belichtungslicht festzustellen, Indem ein an sich In Videokameras in der Regel vorgesehener Weißbalancesteuerkreis zum Erzeugen von Farbkomponentensignalen ausgenutzt wird. Dieser Weißbalancesteuerkreis erzeugt beispielsweise Weißbalancesteuersignale für zwei oder drei Farbkomponenten die üblicherweise bei Videokameras zum automatischen Erzeugen einer Weißbalance eingesetzt werden. Erfindungsgemäß werden diese Farbkomponentensignale, wie noch erläutert werden wird, einerseits mit geeigneten Anzeigevorrichtungen zur Anzeige gebracht und, soweit dies erwünscht ist, zur automatischen Einstellung des Kopiergerätes verwendet.

Wie in Fig. 3 gezeigt ist, können die Farbkomponentensignale, die vorzugsweise für zwei der drei Farbkomponenten erzeugt werden, mittels entsprechender Leuchtdiodenketten 22, 23 zur Anzeige gebracht werden. Jede der Leuchtdiodenketten 22, 23 für zwei der drei Farbkomponenten, die im Beispielsfall die Farbkomponenten Magenta und Gelb sind, enthält eine oder mehrere Leuchtdioden für einen zu geringen Anteil dieser Farbkomponenten und einen oder mehrere Leuchtdioden für einen zu hohen Anteil dieser Farbkomponenten, wobei eine gegenüber diesen Leuchtdioden farblich abweichende Leuchtdiode für einen zutreffenden Anteil .dieser Farbkomponenten vorgesehen ist.

Weißbalancesteuerkreise in modernen Videokameras haben die Eigenschaft, daß sie auf den jeweils hellsten Punkt innerhalb des von ihnen erfaßten Bildes ansprechen, der im Falle einer Voriage einem schwarzen Bereich im Original entspricht. Ein derartiger dunkler oder schwarzer Bereich ist in praktisch jedem Original vorhanden. Die Abweichung dieses hellsten Bereiches von der Farbe weiß wird i wesentlichen von einer Verschiebung der Negativmaske bewirkt, die beispielsweise bei einer Unterbelichtung oder Überbelichtung, bei einer Fehlentwicklung oder Fehllagerung von Negativen auftritt.

Die Bedienungsperson kann nun bei einer Anzeige eines von einem optimalen Wert abweichenden Magenta- oder Gelb-Wertes auf den Leuchtdiodenketten 22, 23 eine entsprechende Nachstellung zugeordneter Farbfilter (bei 6, bei 7, bei 8) vornehmen. Nach einer Kompensation der Farbfiltereinstellung durch entsprechende Betätigung der Farbfilter (bei 6, bei 7, bei 8) kann eine abschließende Überprüfung des Einstellergebnisses auf dem Monitor 16 erfolgen.

Die Dichte kann entweder über das Dichtseinstellerad 9, die Blende 2B oder den Zeitgeber (bei 15) reguliert werden. Ebenfalls ist eine automatische Steuerung mittels der automatischen iris einer Videokamera möglich.

In Abweichung von dem gezeigten Ausführungsbeispiel können die Farbkomponentensignale, die bei dem gezeigten Ausführungsbeispiel den beiden Leuchtdiodenketten 22, 23 zugeführt werden, auch direkt einem Regelkreis (nicht dargestellt) zugeführtwerden, durch den Verstellvorrichtungen für wenigstens zwei Farbfilter (bei 6, bei 7, bei 8), die diesen Farbkomponenten zugeordnet sind, und die Dichte derart einstellbar sind, daß das Farbkomponentensignal für die beiden Farbkomponenten einen Weißbalancezustand annimmt. In diesem Fall entfällt ein von Hand durch eine Bedienungsperson durchgeführtes Nachführen der Farbwerte des von dem Farbmischkopf 2 abgegebenen Belichtungslichtes entsprechend der Anzeige durch die Anzeigevorrichtung 22, 23.

Gemäß einem besonderen Aspekt der vorliegenden Erfindung ist In dem Bildanalysegerät 10 unterhalb des halbdurchlässigen Spiegels 17 eine Dichtemeßsonde 25 angeordnet, deren Ausgangswert bei Betätigung eines Dichtespeicherschalters 26 in eine Dichtespeichereinrichtung (nicht dargestellt) eingelesen wird. Die Abweichung des momentan von der Dichtemeßsonde 25 gemessenen Dichtewertes von dem gespeicherten Dichtewert wird auf einer eigenen, der Dichte zugeordneten Leuchtdiodenkette 27 zur Anzeige gebracht.

Zur Optimierung der Dichteeinstellung wird erfindungsgemäß folgenderweise vorgegangen:

Zunächst wird das Vergrößerungsgerät, beispielsweise durch Absenkung des Kopfbereiches des Vergrößerers, in dem Format der abgebildeten Vorlage an den Erfassungsbereich des Bildanalysegerätes 10 angepaßt, der im wesentlichen der Größe der Glasplatte 16 entspricht. Bei eingelegtem Negativ wird in den Strahlengang zwischen dem Farbmischkopf 2 und dem Bildanalysegerät 10 ein (nicht dargestellter) Diffusor eingeschwenkt und in diesem Zustand der Schalter 26 zur Betätigung des Dichtespelchers betätigt. Nach Ausschwenken des Diffusors aus dem Strahlengang wird der Vergrößerer beispielsweise durch Anheben seines Kopfbereiches so eingestellt, daß die Abbildung der Vorlage auf der Papierauflage 5 die gewünschte Größe hat. Durch Betrachten des Monitorbildes auf dem Monitor 16 wird eine Scharfeinstellung des Vergrößerers 1 vorgenommen.

Nach erneutem Einschwenken des Diffusors wird beispielsweise durch Einstellen des Blendeneinstellrades 9 am Farbmischkopf 2 der Helligkeitswert des Belichtungslichtes solange verstellt, bis aufgrund der Anzeige auf der Dichte-Leuchtdiodenkette 27 zu erkennen ist, daß der momentane Meßwert von der Dichtemeßsonde 25 dem gespeicherten Wert entspricht.

Um den Regelbereich der genannten Blende am Farbmischkopf 2 nicht zu überziehen, kann die Dichtemeßsonde 25 ferner mit dem Zeitgeber des Farbmischkopfes 2 in der Weise in Wirkverbindung stehen, daß bei vollständigem Öffnen oder Schließen der Blende die Belichtungszeit verändert wird. Diese Veränderung wird rechnerisch bei dem Vergleich des gespeicherten Dichtemeßwertes mit dem momentan gemessenen Dichtemeßwert berücksichtigt. Auf diese Weise können die soeben unter Bezugnahme auf die Einstellung der Blende des Farbmischkopfes beschriebenen Anpassungen auch über den Zeitgeber vorgenommen werden.

Mit dem erfindungsgemäßen Bildanalysegerät ist es möglich, eine durch die Bedienungsperson von Hand nachgeführte Farbmischkopfeinstellung oder eine geregelte Farbmischkopfein-Stellung ohne Eingreifen einer Bedienungsperson vorzunehmen, wobei eventuelle Maskenverschiebungen oder Emulsionsverschiebungen der Negativmaske automatisch kompensiert werden. Im Gegensatz zu bekannten Autoscannern erfordert das erfindungsgemäße Bildanalysegerät weder einen Computer zur Berechnung der Farbkomponentenwerte noch Datensätze über die verwendeten Filmtypen, die auch als Filmkanäle bezeichnet werden.

Aufgrund des erfindungsgemäßen Bildanalysegerätes ist es möglich, vorhandene Kopiergeräte bei niedrigem technischen und finanziellen Aufwand zu Kopieranlagen umzufunktionieren, deren qualitative Leistungsfähigkeit über diejenige von computergesteuerten Autoscannern nach dem Stand der Technik hinausgeht.

## Patentansprüche

1. Bildanalysegerät (10) zum Einstellen eines Kopiergerätes (1) für die Herstellung photographischer Abzüge bezüglich einer Farbzusammensetzung des von einer Belichtungseinrichtung (2) des Kopiergerätes (1) abzugebenden Belichtungslichtes und gegebenenfalls einer Schärfe sowie gegebenenfalls eines Blendenwertes und/oder einer Belichtungszeit,
mit einer Videokamera, die eine Videobildwandlervorrichtung (19) umfaßt, zum Aufnehmen des Bildes einer von der Belichtungseinrichtung (2) des Kopiergerätes (1) belichteten Vorlage (4),
gekennzeichnet durch
eine Spektralfiltereinrichtung (21) im Strahlengang der Videobildwandlervorrichtung (19) zum Anpassen des Spektralempfindlichkeitsverlaufes der Videobildwandlervorrichtung (19) an den Spektralempfindlichkeitsverlauf des in dem Kopiergerät (1) verwendeten Fotomaterials,
einen Weißbalancesteuerkreis der Videokamera zum Erzeugen von Farbkomponentensignalen für wenigstens zwei Farbkomponenten des aufgenommenen Bildes in Form von Weißbalancesteuersignalen, wie sie üblicherweise in Videokameras zur automatischen Steuerung der Weißbalance eingesetzt werden, wobei die Farbkomponentensignale die jeweilige Abweichung des hellsten Bereiches des aufgenommenen Bildes von weiß angeben, und
eine Anzeigevorrichtung (22, 23), der die Farbkomponentensignale zur Anzeige wenigstens zweier Farbkomponenten des aufgenommenen Bildes zugeführt werden.

2. Bildanalysegerät nach Anspruch 1, dadurch gekennzeichnet,
daß die Anzeigevorrichtung durch jeweils eine Leuchtdiodenkette (22, 23) für jede der Farbkomponenten gebildet wird.

3. Bildanalysegerät (10) zum Einstellen eines Kopiergerätes (1) für die Herstellung photographischer Abzüge bezüglich einer Farbzusammensetzung des von einer Belichtungseinrichtung (2) des Kopiergerätes (1) abzugebenden Belichtungslichtes und gegebenenfalls einer Schärfe sowie gegebenenfalls eines Blendenwertes und/oder einer Belichtungszeit,
mit einer Videokamera, die eine Videobildwandlervorrichtung (19) umfaßt, zum Aufnehmen des Bildes einer von der Belichtungseinrichtung (2) des Kopiergerätes (1) belichteten Vorlage (4),
gekennzeichnet durch
eine Spektralfiltereinrichtung (21) im Strahlengang der Videobildwandlervorrichtung (19) zum Anpassen des Spektralempfindlichkeitsverlaufes der Videobildwandlervorrichtung (19) an den Spektralempfindlichkeitsverlauf des in dem Kopiergerät (1) verwendeten Fotomaterials,
einen Weißbalancesteuerkreis der Videokamera zum Erzeugen von Farbkomponentensignalen für wenigstens zwei Farbkomponenten des aufgenommenen Bildes in Form von Weißbalancesteuersignalen, wie sie üblicherweise in Videokameras zur automatischen Steuerung der Weißbalance eingesetzt werden, wobei die Farbkomponentensignale die jeweilige Abweichung des hellsten Bereiches des aufgenommenen Bildes von weiß angeben, und
einen Regelkreis, dem die Farbkomponentensignale zugeführt werden, zur Ansteuerung von Verstellvorrichtungen des Kopiergeräts für wenigstens zwei Farbfilter (bei 6, bei 7, bei 8), die den Farbkomponenten zugeordnet sind, derart, daß der hellste Bereich des aufgenommenen Bildes weiß wird.

4. Bildanalysegerät nach einem der Ansprüche 1 bis 3, gekennzeichnet durch
eine im Strahlengang der Videobildwandlervorrichtung (19) angeordnete Blendenvorrichtung oder Dichteverstellvorrichtung (20), die mit einem Zeitgeber der Belichtungseinrichtung (2) des Kopiergerätes (1) verbindbar ist.

5. Bildanalysegerät nach Anspruch 4, gekennzeichnet durch
eine Dichtemeßsonde (25) zum Erfassen der Helligkeit des Belichtungslichtes, deren Ausgangssignal einer Dichtespeichereinrichtung bei Betätigung eines Dichtespeicherschalters (26) zuführbar ist.

## Claims

1. An image analyzer (10) for adjusting a printer (1), which is used for producing photographic prints, with regard to a colour composition of the exposure light which is to be emitted by an exposure means (2) of said printer (1) and, if necessary, a sharp focus as well as, if necessary, an f-number and/or an exposure time, comprising:
a video camera including a video image converter device (19) for recording an original (4) exposed by the exposure means (2) of the printer (1),
characterized by
a spectral filter means (21) arranged in the ray path of the video image converter device (19) for adapting the spectral sensitivity curve of the video image converter device (19) to the spectral sensitivity curve of the photographic material used in said printer (1),
a white balance control circuit of said video camera for producing colour component signals for at least two colour components of the recorded original, said colour component signals indicating the deviation of the brightest areas of the recorded original from white, and
a display device (22, 23) to which the colour component signals are fed for displaying the at least two colour components of the recorded original.

2. An image analyzer according to claim 1, characterized in
that the display device consists of one chain of light-emitting diodes (22, 23) for each of the colour components.

3. An image analyzer (10) for adjusting a printer (1), which is used for producing photographic prints, with regard to a colour composition of the exposure light which is to be emitted by an exposure means (2) of said printer (1) and, if necessary, a sharp focus as well as, if necessary, an f-number and/or an exposure time, comprising:
a video camera including a video image converter device (19) for recording an original (4) exposed by the exposure means (2) of the printer (1),
characterized by
a spectral filter means (21) arranged in the ray path of the video image converter device (19) for adapting the spectral sensitivity curve of the video image converter device (19) to the spectral sensitivity curve of the photographic material used in said printer (1),
a white balance control circuit of said video camera for producing colour component signals for at least two colour components of the recorded original, said colour component signals indicating the deviation of the brightest areas of the recorded original from white, and
a control circuit to which the colour component signals are supplied, for controlling adjustment devices of the printer for at least two colour filters (at 6, at 7, at 8), which are associated with the colour components, such that the brightest area of the recorded original will become white.

4. An image analyzer according to one of the claims 1 to 3,
characterized by
a diaphragm device arranged in the ray path before the video image converter device (19) or a density adjustment device (20) connected to a timer of the exposure device (2) of the printer (1).

5. An image analyzer according to claim 4, characterized by
a density measuring probe (25) for detecting the brightness of the exposure light, the output signal of said density measuring probe being adapted to be supplied to a density storage means, when a density storage switch (26) is actuated.

## Revendications

1. Analyseur d'image (10) destiné à régler une machine à copier (1) pour la réalisation de tirages photographiques quant à une composition de couleurs de la lumière d'exposition à émettre par un dispositif d'exposition (2) de la machine à copier (1) et éventuellement la netteté ainsi qu'éventuellement un indice d'obturateur et/ou un temps d'exposition,
avec une caméra vidéo, qui comporte un dispositif de conversion d'image (19), destinée à photographier l'image d'un original (4) exposé par le dispositif d'exposition (2) de la machine à copier (1),
caractérisé par
un dispositif de filtre spectral (21) sur le tajet du faisceau lumineux du dispositif de conversion d'image (19), destiné à adapter l'évolution de la sensibilité spectrale du dispositif de conversion d'image (19) à l'évolution de la sensibilité spectrale du matériau photographique utiisé dans la machine à copier (1),
un circuit de réglage du balançage du blanc de la caméra vidéo, destiné à générer des signaux de composantes de couleur pour au moins deux composantes de couleur de l'image photographiée sous forme de signaux de réglage du balançage du blanc, tels qu'ils sont habituellement utilisés dans des caméras vidéo pour le réglage automatique du balançage du blanc, les signaux de composantes de couleur indiquant chaque fois l'écart entre la zone la plus claire de l'image photographiée et le blanc, et
un dispositif d'affichage (22, 23), auquel sont amenés les signaux de composantes de couleur, pour l'affichage d'au moins deux composantes de couleur de l'image photographiée.

2. Analyseur d'image suivant la revendication 1, caractérisé en ce que le dispositif d'affichage est constitué de chaque fois une chaîne de diodes électroluminescentes (22, 23) pour chacune des composantes de couleur.

3. Analyseur d'image (10) destiné à régler une machine à copier (1) pour la réalisation de tirages photographiques quant à une composition de couleurs de la lumière d'exposition à émettre par un dispositif d'exposition (2) de la machine à copier (1) et éventuellement la netteté ainsi qu'éventuellement un indice d'obturateur et/ou un temps d'exposition,
avec une caméra vidéo, qui comporte un dispositif de conversion d'image (19), destinée à photographier l'image d'un original (4) exposé par le dispositif d'exposition (2) de la machine à copier (1),
caractérisé par
un dispositif de filtre spectral (21) sur le tajet du faisceau lumineux du dispositif de conversion d'image (19), destiné à adapter l'évolution de la sensibilité spectrale du dispositif de conversion d'image (19) à l'évolution de la sensibilité spectrale du matériau photographique utiisé dans la machine à copier (1),
un circuit de réglage du balançage du blanc de la caméra vidéo, destiné à générer des signaux de composantes de couleur pour au moins deux composantes de couleur de l'image photographiée sous forme de signaux de réglage du balançage du blanc, tels qu'ils sont habituellement utilisés dans des caméras vidéo pour le réglage automatique du balançage du blanc, les signaux de composantes de couleur indiquant chaque fois l'écart entre la zone la plus claire de l'image photographiée et le blanc, et
un circuit de réglage, auquel sont amenés les signaux de composantes de couleur, destiné à commander des dispositifs de réglage de la machine à copier pour au moins deux filtres colorés (en 6, en 7, en 8) qui sont associés aux composantes de couleur, de telle manière que la zone la plus claire de l'image photographiée devient blanche.

4. Analyseur d'image suivant l'une des revendications 1 à 3, caractérisé par un dispositif d'obturateur ou dispositif de réglage d'intensité (20), disposé dans le trajet du faisceau lumineux du dispositif de conversion d'image (19), qui peut être connecté à un capteur de temps du dispositif d'exposition (2) de la machine à copier (1).

5. Analyseur d'image suivant la revendication 4, caractérisé par une sonde de mesure d'intensité (25), destinée à capter la luminosité de la lumière d'exposition, dont le signal de sortie peut être amené à un dispositif de mémoire d'intensité en actionnant un interrupteur de mémoire d'intensité (26).
